(19) **Europäisches Patentamt / European Patent Office / Office européen des brevets**

(11) **EP 1 235 052 B1**

(12) **FASCICULE DE BREVET EUROPEEN**

(45) Date de publication et mention de la délivrance du brevet:
**19.09.2007 Bulletin 2007/38**

(51) Int Cl.:
**G01C 21/36** *(2006.01)* **G05D 1/03** *(2006.01)*
**B60K 28/06** *(2006.01)*

(21) Numéro de dépôt: **02290362.9**

(22) Date de dépôt: **14.02.2002**

(54) **Système d'aide au maintien dans la voie pour un véhicule automobile**

In einem Fahrzeug befindliches System zur Unterstützung beim Folgen einer Fahrspur

Lane keeping assistance system for a vehicle

(84) Etats contractants désignés:
**DE GB**

(30) Priorité: **26.02.2001 FR 0102547**

(43) Date de publication de la demande:
**28.08.2002 Bulletin 2002/35**

(73) Titulaire: **RENAULT s.a.s.**
**92100 Boulogne Billancourt (FR)**

(72) Inventeurs:
• **Roch, Hubert**
**78000 Versailles (FR)**

• **Capperon, Stéphane**
**92500 Rueil Malmaison (FR)**

(56) Documents cités:
**FR-A- 2 787 081          US-A- 5 699 057**
**US-A- 5 835 028**

• **PATENT ABSTRACTS OF JAPAN vol. 2000, no. 11, 3 janvier 2001 (2001-01-03) & JP 2000 225877 A (MAZDA MOTOR CORP), 15 août 2000 (2000-08-15)**

## Description

L'invention concerne un système d'aide au maintien dans la voie pour un véhicule automobile.

De nombreux accidents de circulation sont dus à des sorties de route involontaires, à la suite en particulier de la baisse de vigilance du conducteur. Pour y remédier, de nombreuses solutions ont été étudiées.

Ainsi, le document EP 527 665 propose un dispositif embarqué comportant en particulier une caméra fournissant une image de la route pour détecter la position du véhicule sur la voie de circulation. En cas de position anormale du véhicule par rapport à la voie, il propose d'avertir le conducteur par des signaux d'alarme visuelle, sonore ou kinésthésique. De fausses alarmes sont évitées en prenant en compte l'intention du conducteur de changer de voie, par exemple par l'état des clignoteurs.

Un autre dispositif d'aide au maintien dans la voie est proposé par le document DE 19 507 957. Ce dispositif détecte la position du véhicule par des capteurs infrarouges latéraux et frontaux. Dans un mode de réalisation, une alarme sonore est générée lorsque le véhicule s'approche de la limite de la voie. Dans un autre mode de réalisation, le véhicule est maintenu automatiquement dans la voie, sans intervention du conducteur.

Le système de commande du document FR-A1-2 773 130 est destiné à alléger la tâche du conducteur dans le contrôle transversal de son véhicule et à assurer une fonction de guidage automatique. Le conducteur peut reprendre en main le contrôle de la direction, à tout instant, en vue d'un dépassement de véhicule, d'un changement de voie ou d'un repositionnement du véhicule dans la voie par exemple. Il s'agit d'un système de direction assistée tenant compte de paramètres comme la position du véhicule dans la voie et les intentions du conducteur.

Ce système peut être complété par un module de diagnostic des actions et intentions du conducteur, décrit dans le document FR-A1-2 787 081. Il propose un diagnostic en temps réel des actions du conducteur sur le volant du véhicule. Le conducteur peut vouloir changer de voie ou simplement décaler son véhicule sur une même voie, ou dans le cas d'un virage par exemple, laisser volontairement avancer son véhicule sans faire d'action sur le volant dans le but de changer de voie. Le système effectue donc un diagnostic sur les intentions du conducteur par détection de la trajectoire du véhicule en corrélation avec les actions du conducteur. Il classe alors les intentions suivantes :

- changer de voie à droite ou à gauche ;

- se décaler à droite ou à gauche ;

- rester à la même position dans la voie.

Dans le document EP 812 723, un siège vibrant est proposé pour maintenir le conducteur éveillé. En mode de fonctionnement, les vibrations sont générées par cycles. Le fonctionnement est déclenché par le conducteur par l'intermédiaire d'un bouton de commande, ou de manière temporisée après le démarrage du véhicule.

Dans le document US 5 835 028, il est proposé un système de détection de voie et d'alarme comportant une caméra visant une route à l'avant du véhicule, un microprocesseur traitant les images et un dispositif d'alarme. Dans un mode de réalisation particulier le système comporte, en outre, un détecteur de l'orientation des roues directrices et un détecteur de la position des clignotants. Ces détecteurs renseignent sur l'intention du conducteur de changer de voie pour éviter les fausses alertes. L'alarme pour le franchissement de ligne peut être donnée par un siège vibrant.

C'est donc un objectif de l'invention de fournir un système d'aide au maintien dans la voie, amélioré par rapport à l'art antérieur.

Avec cet objectif en vue, l'invention a pour objet un système d'aide au maintien d'un véhicule dans une voie de circulation, délimitée par des lignes, comportant des moyens de détection pour détecter la position et mesurer les vitesses du véhicule, un calculateur recevant des informations des moyens de détection pour diagnostiquer une probabilité de changement de voie et une intention de changement de voie, et un siège vibrant commandé par le calculateur pour signaler l'imminence d'une sortie de voie au conducteur, caractérisé en ce que le calculateur détermine un délai avant le franchissement d'une des lignes en fonction de la position et des vitesses du véhicule par rapport à la ligne et fait varier une caractéristique des vibrations du siège en fonction du délai avant le franchissement de la ligne.

Grâce à l'invention, le conducteur est sollicité par une interface peu utilisée, et donc qui porte peu à confusion. De plus, les sensations ressenties par le conducteur se rapprochent de celles qu'il perçoit quand le véhicule roule sur des bandes rugueuses en limite de voie de circulation. Il comprend donc très facilement cette information.

Les moyens de détection de la position, en particulier transversale, du véhicule sont par exemple une caméra dirigée sur la voie à l'avant du véhicule, des capteurs infrarouges détectant les lignes de limite de voie, un système de localisation par satellite couplé à une base de données cartographique numérique, un capteur de vitesse longitudinale, un gyromètre pour mesurer la vitesse de lacet, ou une combinaison de ces capteurs. Ces moyens permettent de déterminer avec précision la position du véhicule dans la voie, ainsi que les vitesses longitudinale et transversale.

De manière avantageuse, le calculateur diagnostique en outre une intention de changement de voie et ne commande pas les vibrations du siège vibrant quand le conducteur a l'intention de changer de voie.

Le calculateur peut recevoir également des informations de capteurs embarqués sur le véhicule tels que par exemple un capteur de couple sur le volant et des capteurs de position pour détecter la position du volant, des pédales et de l'indicateur de changement de direction.

Avec l'ensemble des informations, le calculateur détermine une intention du conducteur de changer de voie. Ainsi, aucune alarme intempestive n'est produite quand le conducteur change volontairement de voie pour un dépassement ou pour changer de direction et pour quitter la voie de circulation actuelle.

Plus particulièrement, le calculateur détermine un indice de volonté de changement de voie et un indice de probabilité de changement de voie, la valeur maximale de l'indice de probabilité correspondant à une certitude de changement de voie, la valeur maximale de l'indice de volonté correspondant à une absence de volonté de changement de voie, l'actionnement du siège vibrant étant commandé lorsque le produit des indices de volonté et de probabilité est supérieur à un seuil prédéterminé.

L'indice de volonté de changement de voie peut être établi de manière simple par exemple par l'état de l'indicateur de changement de direction. Si le conducteur indique par ce moyen un changement de direction, l'indice de volonté vaut zéro. Sinon, il vaut un. Ainsi, le produit des indices de volonté et de probabilité sera nul quand le conducteur aura une intention de changement de voie. En choisissant un seuil positif et non nul, aucune alarme n'est générée quand le produit est nul.

Dans une configuration plus perfectionnée, on pourra utiliser un diagnostic utilisant les règles de la logique du flou comme décrit dans le document FR-2 787 081, en traduisant le diagnostic par un indice numérique variant entre zéro et un.

De manière avantageuse, les vibrations ne sont générées que du côté du siège correspondant au côté où la sortie de voie est imminente. Ainsi, le conducteur reçoit une information supplémentaire, facile à comprendre. Il peut réagir très rapidement dans le bon sens pour éviter la sortie de route car il est informé du côté où la sortie de voie est imminente.

Dans une première variante, la caractéristique variable est l'amplitude des vibrations.

Dans une deuxième variante, la caractéristique variable est la fréquence des vibrations. Les deux variantes peuvent éventuellement être combinées.

De manière plus précise, le délai avant le franchissement de la ligne est déterminé par le quotient entre la distance du véhicule par rapport à la ligne et la vitesse latérale du véhicule par rapport à la voie.

De manière avantageuse, la caractéristique variable est nulle au-delà d'un premier seuil du délai avant franchissement de la ligne, croît entre le premier seuil et un deuxième seuil du délai avant franchissement de la ligne, le deuxième seuil étant inférieur au premier seuil, augmente brusquement au deuxième seuil et reste constante en deçà du deuxième seuil. La brusque augmentation au deuxième seuil donne une sensation univoque de franchissement de la ligne limite de voie. Grâce au palier en deçà du deuxième seuil, le maximum est atteint avant le franchissement effectif de la ligne, ce qui donne un délai de réaction au conducteur.

Selon un premier perfectionnement, la croissance de la caractéristique variable entre le premier et le deuxième seuil est linéaire.

Selon un deuxième perfectionnement, la caractéristique variable entre le premier et le deuxième seuil est une fonction d'une puissance différente de 1. En ajustant la puissance, on modifie la progressivité de l'information qui est donnée au conducteur.

L'invention sera mieux comprise et d'autres particularités et avantages apparaîtront à la lecture de la description qui va suivre, la description faisant référence aux dessins annexés parmi lesquels :

- la figure 1 est un schéma fonctionnel d'un système selon l'invention ;

- la figure 2 est un graphique représentant la probabilité du changement de voie ;

- la figure 3 est un graphique de l'amplitude de vibration en fonction du délai avant franchissement de la ligne selon un premier perfectionnement ;

- la figure 4 est un graphique de l'amplitude de vibration en fonction du délai avant franchissement de la ligne selon un deuxième perfectionnement.

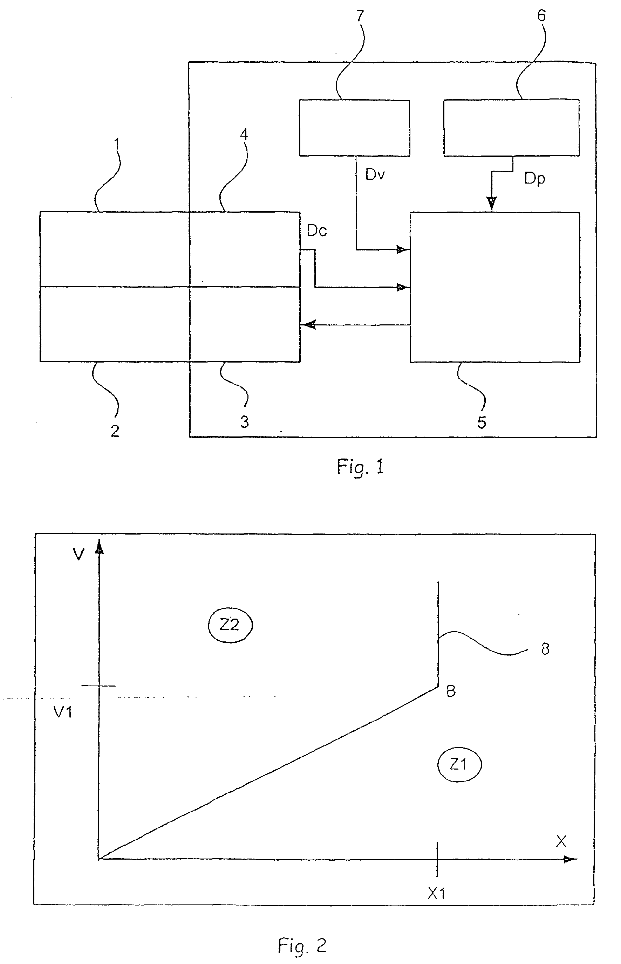

Un système d'aide au maintien dans la voie conforme à l'invention est schématisé sur la figure 1. Le système est interfacé avec un conducteur 1 qui est assis sur un siège 2, le siège 2 comportant des moyens vibrants 3 pour générer des vibrations qui donnent une alarme au conducteur 1. Le conducteur 1 agit sur les commandes du véhicule. Les commandes comportent des capteurs 4 qui délivrent des informations Dc.

Le système comporte également un calculateur 5 qui reçoit les informations Dc. Le calculateur 5 commande les moyens vibrants 3. Le système comporte en outre un module de localisation 6 qui délivre des informations de position et de vitesse Dp du véhicule. D'autres capteurs 7 donnent des informations sur le véhicule.

Dans un cycle de surveillance, le calculateur détecte un changement de voie en cours en fonction des informations de position et de vitesse Dp du véhicule et qu'il quantifie par une probabilité de changement de voie Pc, comprise entre 0 et 1. Par ailleurs, il détermine également une intention du conducteur en fonction des informations Dc issues des capteurs 4 et éventuellement des informations Dp. L'intention est quantifiée par un indice d'intention Pv, compris entre 0 et 1. La valeur 1 pour Pv correspond à une absence d'intention de changer de voie.

Une fois la probabilité Pc et l'indice Pv déterminés, le calculateur en effectue le produit et compare le produit à un seuil S. Si le produit est supérieur au seuil, le calculateur commande les moyens de vibrations pour générer des vibrations sur le siège pendant quelques secondes. Un nouveau cycle de surveillance est recommencé.

A titre d'exemple, pour déterminer la probabilité Pc de changement de voie, une ligne 8 est tracée sur le diagramme de la figure 2 pour délimiter deux zones. Le diagramme a pour abscisse la distance X du véhicule à la ligne délimitant la voie, et pour ordonnée une vitesse de lacet V relative à la voie, en degré par seconde. La vitesse de lacet V correspond au changement d'orientation du véhicule dans la voie. La ligne 8 comporte un premier segment passant par l'origine et se poursuivant jusqu'à un point B de coordonnées X1, V1 et un deuxième segment d'abscisse X1. Une première zone Z1 est située entre l'axe des abscisses et la ligne 8 et une deuxième zone Z2 est située entre l'axe des ordonnées et la ligne 8. Dans la zone Z1, la probabilité de changer de voie Pc vaut 0, alors que dans la deuxième zone Z2, elle vaut 1. Ainsi, quand le véhicule est à proximité du bord de la voie, une variation de la direction vers le bord de la voie entraîne le passage dans la zone Z2 et déclenche l'alarme. On peut envisager d'autres diagrammes dans lesquels il existe des zones intermédiaires entre Z1 et Z2, avec des valeurs intermédiaires de probabilité.

Les vibrations générées par le siège vibrant 2 peuvent avoir une intensité et une fréquence fixe, la durée de vibrations étant également prédéterminée. Les vibrations sont éventuellement arrêtées dès que la probabilité de changement de voie est nulle.

De préférence, les vibrations ne sont générées que d'un seul côté du siège 2, le côté où le changement de voie est prévu. Par exemple, si le véhicule dérive à droite, les vibrations seront générées sur le côté droit du siège.

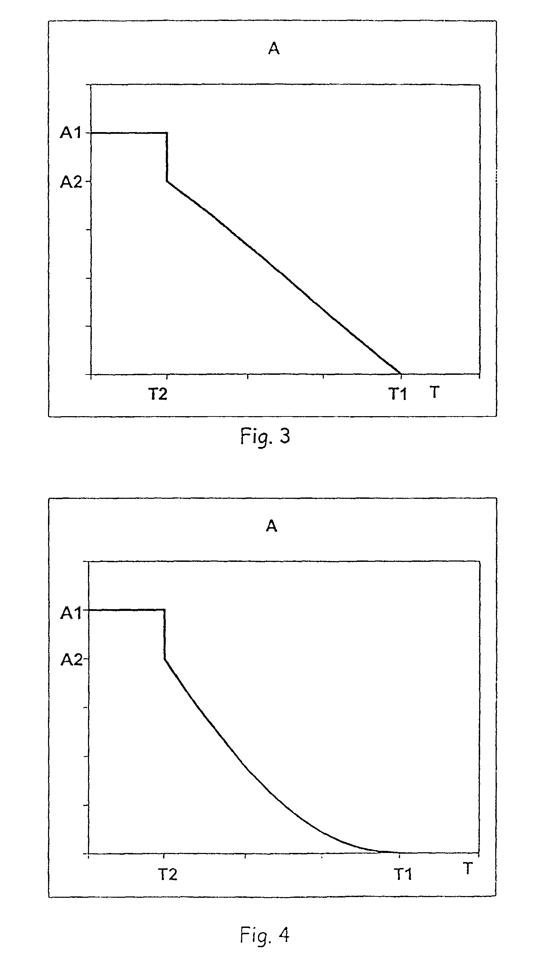

Dans un mode de réalisation particulier, les vibrations sont modulées soit en amplitude, soit en fréquence. Dans les deux cas, les figures 3 et 4 montrent des exemples de modulation de la caractéristique variable A (amplitude ou fréquence).

Les diagrammes des figures 3 et 4 ont en ordonnée la caractéristique variable A, et en abscisse un délai T avant franchissement de la ligne. Ce dernier est évalué par le rapport entre la distance du véhicule à la ligne et la vitesse transversale du véhicule dans la voie.

La valeur de la caractéristique variable A est nulle au-delà d'un premier seuil T1 du délai avant franchissement de la ligne. Elle croît entre le premier seuil et un deuxième seuil T2 du délai avant franchissement de la ligne jusqu'à une valeur A2, le deuxième seuil T2 étant inférieur au premier seuil T1. Au seuil T2, la valeur A passe brusquement à une valeur maximale A1. Elle reste constante à la valeur A1 quand le délai avant franchissement de la ligne est très court, inférieur au deuxième seuil T2.

Dans le cas de la figure 3, la variation de la caractéristique variable est linéaire entre T1 et T2. Dans le cas de la figure 4, entre T1 et T2, la caractéristique variable répond à une loi du type suivant :

$$A = K.(T1 - T)^p$$

Avec :

T : délai avant franchissement de la voie ;

K : coefficient constant ;

p : facteur de puissance, supérieur à 1.

## Revendications

1. Système d'aide au maintien d'un véhicule dans une voie de circulation délimitée par des lignes, comportant des moyens de détection (6) pour détecter la position et mesurer les vitesses du véhicule, un calculateur (5) recevant des informations (Dp) des moyens de détection (6) pour diagnostiquer une probabilité de changement de voie (Pc) et une intention de changement de voie, et un siège vibrant (2) commandé par le calculateur (5) pour signaler l'imminence d'une sortie de voie au conducteur, **caractérisé en ce que** le calculateur (5) détermine un délai (T) avant le franchissement d'une des lignes en fonction de la position et des vitesses du véhicule par rapport à la ligne et fait varier une caractéristique (A) des vibrations du siège en fonction du délai avant le franchissement de la ligne.

2. Système d'aide selon la revendication 1, **caractérisé en ce que** le calculateur (5) diagnostique en outre une intention de changement de voie et ne commande pas les vibrations du siège vibrant (2) quand le conducteur a l'intention de changer de voie.

3. Système d'aide selon la revendication 2, **caractérisé en ce que** le calculateur (5) détermine un indice de volonté (Pv) de changement de voie et un indice de probabilité (Pc) de changement de voie, la valeur maximale de l'indice de probabilité (Pc) correspondant à une certitude de changement de voie, la valeur maximale de l'indice de volonté (Pv) correspondant à une absence de volonté de changement de voie, l'actionnement du siège vibrant (2) étant commandé lorsque le produit des indices de volonté (Pv) et de probabilité (Pc) est supérieur à un seuil prédéterminé.

4. Système d'aide selon la revendication 1, **caractérisé en ce que** les vibrations sont générées sur un côté du siège (2), le côté correspondant au côté où la sortie de voie est imminente.

**5.** Système d'aide selon la revendication 1, **caractérisé en ce que** la caractéristique variable (A) est l'amplitude des vibrations.

**6.** Système d'aide selon la revendication 1, **caractérisé en ce que** la caractéristique variable (A) est la fréquence des vibrations.

**7.** Système d'aide selon la revendication 1, **caractérisé en ce que** le délai (T) avant le franchissement de la ligne est déterminé par le quotient entre la distance (X) du véhicule par rapport à la ligne et la vitesse (V) latérale du véhicule par rapport à la voie.

**8.** Système d'aide selon la revendication 1, **caractérisé en ce que** la caractéristique variable (A) est nulle au-delà d'un premier seuil (T1) du délai avant franchissement de la ligne, croît entre le premier seuil (T1) et un deuxième seuil (T2) du délai avant franchissement de la ligne, le deuxième seuil (T2) étant inférieur au premier seuil (T1), augmente brusquement au deuxième seuil, et reste constante en deça du deuxième seuil (T1).

**9.** Système d'aide selon la revendication 8, **caractérisé en ce que** la croissance de la caractéristique variable (A) entre le premier (T1) et le deuxième seuil (T2) est linéaire.

**10.** Système d'aide selon la revendication 8, **caractérisé en ce que** la caractéristique variable (A) entre le premier (T1) et le deuxième seuil (T2) est une fonction d'une puissance (p) différente de 1.

**Claims**

**1.** Aid system for keeping a vehicle in a traffic lane defined by lines, comprising means of detection (6) for detecting the position and measuring the speeds of the vehicle, a computer (5) receiving signals (Dp) from the means of detection (6) to identify a lane change probability (Pc) and a lane change intention, and a vibrating seat (2) activated by the computer (5) to signal the imminence of a lane exit to the driver, **characterized in that** the computer (5) determines a time (T) before the crossing of one of the lines according to the position and speeds of the vehicle in relation to the line and varies a characteristic (A) of the vibrations of the seat according to the time before the crossing of the line.

**2.** Aid system according to Claim 1, **characterized in that** the computer (5) also identifies a lane change intention and does not activate the vibrations of the vibrating seat (2) when the driver has the intention of changing lane.

**3.** Aid system according to Claim 2, **characterized in that** the computer (5) determines a lane change decision indicator (Pv) and a lane change probability indicator (Pc), the maximum value of the probability indicator (Pc) corresponding to a lane change certainty, the maximum value of the decision indicator (Pv) corresponding to an absence of lane change decision, the operation of the vibrating seat (2) being activated when the product of the decision (Pv) and probability (Pc) indicators is more than a preset threshold.

**4.** Aid system according to Claim 1, **characterized in that** the vibrations are generated on one side of the seat (2), the side corresponding to the side where the lane exit is imminent.

**5.** Aid system according to Claim 1, **characterized in that** the variable characteristic (A) is the amplitude of the vibrations.

**6.** Aid system according to Claim 1, **characterized in that** the variable characteristic (A) is the frequency of the vibrations.

**7.** Aid system according to Claim 1, **characterized in that** the time (T) before the crossing of the line is determined by the quotient of the distance (X) of the vehicle from the line divided by the lateral speed (V) of the vehicle relative to the lane.

**8.** Aid system according to Claim 1, **characterized in that** the variable characteristic (A) is zero before a first threshold (T1) of the time before crossing of the line, increases between the first threshold (T1) and a second threshold (T2) of the time before crossing of the line, the second threshold (T2) being less than the first threshold (T1), increases sharply at the second threshold, and remains constant after the second threshold (T2).

**9.** Aid system according to Claim 8, **characterized in that** the increase of the variable characteristic (A) between the first threshold (T1) and the second threshold (T2) is linear.

**10.** Aid system according to Claim 8, **characterized in that** the variable characteristic (A) between the first threshold (T1) and the second threshold (T2) is a function of a power (p) different from 1.

**Patentansprüche**

**1.** Assistenzsystem für den Halt eines Fahrzeugs in einer von Linien begrenzten Fahrspur, das Erfassungsmittel (6) zum Erfassen der Position und zum Messen der Geschwindigkeiten des Fahrzeugs, einen Rechner (5), der Informationen (Dp) von den Erfassungsmitteln (6) empfängt, um eine Wahrscheinlichkeit der Spuränderung (Pc) und eine Absicht der Spuränderung zu diagnostizieren, und einen vom Rechner (5) gesteuerten vibrierenden Sitz (2) aufweist, um dem Fahrer das unmittelbare Bevorstehen des Verlassens der Fahrspur anzuzeigen, **dadurch gekennzeichnet, dass** der Rechner (5) eine Zeitspanne (T) vor dem Überqueren einer der Linien in Abhängigkeit von der Position und den Geschwindigkeiten des Fahrzeugs bezüglich der Linie bestimmt und ein Merkmal (A) der Vibrationen des Sitzes in Abhängigkeit von der Zeitspanne vor dem Überqueren der Linie verändert.

2. Assistenzsystem nach Anspruch 1, **dadurch gekennzeichnet, dass** der Rechner (5) außerdem eine Spurwechselabsicht diagnostiziert und die Vibrationen des vibrierenden Sitzes (2) nicht anordnet, wenn der Fahrer die Absicht hat, die Spur zu wechseln.

3. Assistenzsystem nach Anspruch 2, **dadurch gekennzeichnet, dass** der Rechner (5) einen Index des Spurwechselwillens (Pv) und einen Index der Spurwechselwahrscheinlichkeit (Pc) bestimmt, wobei der maximale Wert des wahrscheinlichkeitsindex (Pc) einer Spurwechselgewissheit entspricht, der maximale Wert des Willensindex (Pv) einem Nichtvorhandensein eines Spurwechselwillens entspricht, wobei die Betätigung des vibrierenden Sitzes (2) angeordnet wird, wenn das Produkt des Willensindex (Pv) und des Wahrscheinlichkeitsindex (Pc) höher als ein vorbestimmter Schwellwert ist.

4. Assistenzsystem nach Anspruch 1, **dadurch gekennzeichnet, dass** die Vibrationen auf einer Seite des Sitzes (2) erzeugt werden, wobei die Seite der Seite entspricht, auf der das Verlassen der Spur unmittelbar bevorsteht.

5. Assistenzsystem nach Anspruch 1, **dadurch gekennzeichnet, dass** das veränderliche Merkmal (A) die Amplitude der Vibrationen ist.

6. Assistenzsystem nach Anspruch 1, **dadurch gekennzeichnet, dass** das veränderliche Merkmal (A) die Frequenz der Vibrationen ist.

7. Assistenzsystem nach Anspruch 1, **dadurch gekennzeichnet, dass** die Zeitspanne (T) vor dem Überqueren der Linie durch den Quotient zwischen dem Abstand (X) des Fahrzeugs bezüglich der Linie und der Seitengeschwindigkeit (V) des Fahrzeugs bezüglich der Spur bestimmt wird.

8. Assistenzsystem nach Anspruch 1, **dadurch gekennzeichnet, dass** das veränderliche Merkmal (A) oberhalb eines ersten Schwellwerts (T1) der Zeitspanne vor dem Überqueren der Linie Null ist, zwischen dem ersten Schwellwert (T1) und einem zweiten Schwellwert (T2) der zeitspanne vor dem Überqueren der Linie ansteigt, wobei der zweite Schwellwert (T2) unter dem ersten Schwellwert (T1) liegt, abrupt beim zweiten Schwellwert zunimmt, und unterhalb des zweiten Schwellwerts (T2) konstant bleibt.

9. Assistenzsystem nach Anspruch 8, **dadurch gekennzeichnet, dass** das Ansteigen des veränderlichen Merkmals (A) zwischen dem ersten (T1) und dem zweiten Schwellwert (T2) linear ist.

10. Assistenzsystem nach Anspruch 8, **dadurch gekennzeichnet, dass** das veränderliche Merkmal (A) zwischen dem ersten (T1) und dem zweiten Schwellwert (T2) eine Funktion einer Leistung (p) ungleich 1 ist.

Fig. 1

Fig. 2

Fig. 3

Fig. 4

EP 1 235 052 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 527665 A
- DE 19507957
- FR 2773130 A1
- FR 2787081 A1
- EP 812723 A
- US 5835028 A
- FR 2787081